# FASCICULE DE BREVET EUROPEEN

(11) **EP 2 603 415 B1**
(45) Date de publication et mention de la délivrance du brevet: **12.07.2017**
(21) Numéro de dépôt: 11757371.7
(22) Date de dépôt: 28.07.2011
(51) Int. Cl.: B62D 25/08, B60G 15/06, B62D 65/12, B60G 99/00

(54) **PROCEDE DE MONTAGE D'UN ENSEMBLE DE TRAIN AVANT ET DE BERCEAU A UNE PARTIE DE CAISSE D'UN VEHICULE AUTOMOBILE**
MONTAGEVERFAHREN FÜR EINE VORDERE AUFHÄNGUNG UND EINEN HILFSTRÄGER MIT DEM CHASSIS EINES KRAFTFAHRZEUGS
ASSEMBLY PROCESS FOR A FRONT SUSPENSION AND CRADDLE ONTO THE CHASSIS OF A VEHICLE

(30) Priorité: 11.08.2010 FR 1056551
(43) Date de publication de la demande: 19.06.2013
(73) Titulaire: Peugeot Citroën Automobiles SA, 78140 Vélizy Villacoublay (FR)
(72) Inventeur: PRAT, Stéphane, F-25420 Voujeaucourt (FR)
(74) Mandataire: Fosse, Danièle
(86) Numéro de dépôt international: PCT/FR2011/051834
(87) Numéro de publication internationale: WO 2012/020192

(56) Documents cités:
- EP-A2- 1 619 109
- JP-A- 2001 018 868
- JP-A- 2002 019 656
- JP-A- 2002 019 657
- JP-A- 2009 220 718
- JP-A- 2009 241 823
- US-A1- 2003 085 591
- US-A1- 2005 093 286

## Description

La présente invention concerne un procédé de montage d'un ensemble de train avant et de berceau à une partie de caisse d'un véhicule, tel qu'un véhicule automobile.

Elle se rapporte plus particulièrement à la géométrie des trains roulants notamment avant des véhicules et qui est définie par des angles caractéristiques comprenant notamment la chasse et le carrossage.

La chasse est l'angle formé par l'axe d'inclinaison de chaque pivot de roue et la verticale en considérant le véhicule vu de côté et le carrossage est l'angle formé par la fusée de roue et l'horizontale.

Ces angles caractéristiques dépendent de la géométrie des organes du train roulant tels que les bras de suspension et les amortisseurs et des ancrages de ces organes par rapport à la caisse du véhicule.

Si la caisse comporte des dispersions dimensionnelles trop importantes, ces ancrages ne sont pas disposés correctement et le train roulant monté sur la caisse présente une géométrie déformée par rapport à une géométrie de référence souhaitée.

Par exemple, une dispersion de la symétrie de l'angle de chasse des roues droite et gauche entraine des problèmes de tenue de cap des véhicules qui ont tendance à un tirage à droite ou un tirage à gauche en fonction du dévers de la route. Ce tirage se manifeste par un balourd au volant de direction du véhicule exigeant de la part du conducteur d'exercer un effort sur le volant pour maintenir la trajectoire du véhicule.

Diverses solutions ont été proposées pour résoudre le problème de réglage de la géométrie d'un train roulant d'un véhicule, mais elles se sont avérées complexes et relativement coûteuses.

Un procédé de montage d'un ensemble de train avant et de berceau à une partie de caisse de véhicule tel que décrit par le préambule de la revendication 1 est connu du document de l'état de l'art EP 1 619 109 A2. La présente invention a pour but de palier les inconvénients ci-dessus en proposant une solution permettant de garantir une géométrie souhaitée d'un train roulant avant d'un véhicule.

A cet effet, selon l'invention, le procédé de montage d'un ensemble de train avant et de berceau à une partie de caisse d'un véhicule constituée par une unité avant comportant deux longerons parallèles et un tablier solidaire des longerons, est caractérisé en ce qu'il comprend :
- une étape d'assemblage de l'ensemble à train avant et berceau,
- une étape d'assemblage de l'unité avant à longerons et tablier, ce procédé étant caractérisé par;
   - une étape de positionnement de l'unité avant relativement à un outil de référence qui comporte des points d'indexation reproduisant les emplacements d'ancrage de têtes d'amortisseurs du train avant conformément à une géométrie déterminée du train avant,
   - une étape de positionnement de bols d'ancrage des têtes d'amortisseurs relativement à l'unité avant et aux points d'indexation de l'outil de référence,
   - une étape de fixation des bols à l'unité avant à la position correspondant aux emplacements d'ancrage des têtes d'amortisseurs du train avant,
   - une étape de retrait mutuel de l'outil de référence et de l'unité avant, et
   - une étape d'assemblage de l'ensemble de train avant et de berceau à l'unité avant de façon que les têtes d'amortisseurs puissent être ancrées dans leurs bols respectifs.

De préférence, l'outil de référence est fixe.

Le procédé consiste à positionner longitudinalement et verticalement chaque bol d'ancrage relativement à l'unité avant par appui d'une paroi sensiblement plane du bol le long d'une paroi latérale du longeron correspondant et à fixer chaque bol d'ancrage à la paroi latérale du longeron.

De préférence, chaque bol d'ancrage est fixé au longeron correspondant par soudage.

A l'étape de positionnement des bols d'ancrage, ceux-ci sont centrés sur les points d'indexation de l'outil de référence par des portées tronconiques de forme conjuguée respectivement des bols et des points d'indexation.

Avantageusement, la portée tronconique de chaque bol est formée dans une plaque amoviblement fixée sur une paroi supérieure du bol.

Chaque plaque peut être positionnée relativement au bol suivant une direction transversale au longeron correspondant avant d'être fixée au bol.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 représente en perspective un brancard de véhicule automobile auquel s'applique l'invention et muni des moyens d'ancrage de têtes d'amortisseurs de suspension ;
- les figures 2 à 4 représentent en perspective diverses étapes d'assemblage, selon l'art antérieur, du brancard, des moyens d'ancrage des têtes d'amortisseurs de suspension et d'un tablier pour constituer un ensemble auquel sera assemblé un autre ensemble à berceau et train avant du véhicule ;
- les figures 5 et 6 représentent en perspective et conformément à l'invention les étapes d'assemblage de l'ensemble à brancard, tablier et moyens d'ancrage des têtes d'amortisseur de suspension et auquel sera assemblé l'ensemble à berceau et train avant du véhicule dans le but de respecter une géométrie déterminée de ce train ;

- la figure 7 est une vue partielle en coupe de l'ancrage d'une tête d'amortisseur de suspension à un bol d'un longeron du brancard ;
- la figure 8 est une vue en perspective du bol d'ancrage d'une tête d'amortisseur de suspension ;
- la figure 9 est une vue en perspective du dessus de l'outil inférieur de l'outil de référence ;
- la figure 9a est une vue agrandie de la figure 9 ;
- la figure 9b est une figure agrandie de la figure 9 ;
- la figure 10 est une vue en perspective de la face du dessous de l'outil supérieur de l'outil de référence ;
- la figure 10a représente une vue agrandie de la figure 10 ; et
- la figure 10b est une vue selon la figure 10a pourvue de la pièce portée.

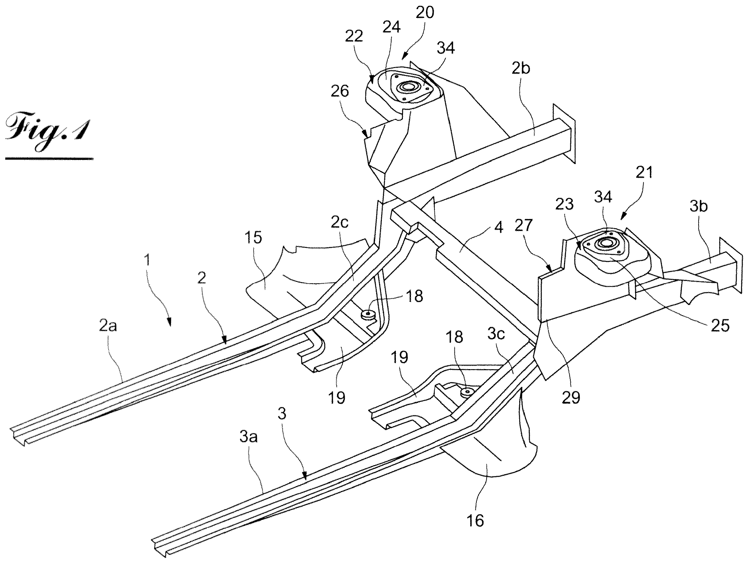

Les figures 1 à 8 représentent une partie d'une structure d'un véhicule automobile comprenant un brancard 1 comportant deux longerons 2, 3, disposés sur les côtés droit et gauche du véhicule, symétriquement par rapport à un plan médian longitudinal de ce véhicule.

Les longerons 2, 3 comprennent chacun sur le côté correspondant du véhicule, une poutre médiane gauche 2a ou droite 3a et une poutre antérieure gauche 2b ou droite 3b s'étendant vers l'avant du véhicule et surélevée par rapport à la poutre médiane 2a, 3a en étant reliée à cette dernière par une poutre inclinée gauche 2c et droite 3c.

Une traverse 4 relie les extrémités postérieures respectives des poutres antérieures gauche 2b et droite 3b.

Les longerons 2, 3 du brancard s'étendent respectivement d'un tablier 5 auquel ils sont solidarisés, notamment par soudage.

L'ensemble constitué par les longerons 2, 3 du brancard 1, la traverse 4 et le tablier 5 constitue une unité avant de caisse du véhicule.

La structure du véhicule comprend également un berceau 7 destiné à être fixé aux deux longerons 2, 3 transversalement à ceux-ci sous le tablier 5 de l'unité avant et un train avant 8 du véhicule assemblé au berceau 7.

Ce train avant comprend essentiellement deux triangles de suspension de roue 9, 10 montés respectivement sur les côtés gauche et droit du berceau 7, deux biellettes de direction des roues 11, 12 situées à gauche et à droite des triangles de suspension 9, 10 et deux amortisseurs de suspension 13, 14 situés à gauche et à droite du berceau 7.

Bien que cela ne soit pas représenté aux figures, la structure du véhicule comprend un plancher d'habitacle s'étendant le long de l'axe longitudinal du véhicule de l'avant vers l'arrière du véhicule sous les deux longerons 2, 3 auxquels il est fixé par l'intermédiaire notamment de deux plaques 15, 16 solidaires des deux longerons 2, 3 au niveau de leurs poutres inclinées 2c, 3c en faisant saillie à l'extérieur de ces longerons. Le plancher d'habitacle est rigidifié dans sa zone médiane par un tunnel longitudinal central, non représenté, disposé entre les deux longerons 2, 3 du brancard 1.

Le berceau 7 comprend des pions d'indexation 17 du berceau relativement aux longerons 2, 3 du brancard pour positionner parfaitement le berceau 7 relativement au brancard 1 avant fixation de ce berceau aux longerons 2, 3 du brancard 1.

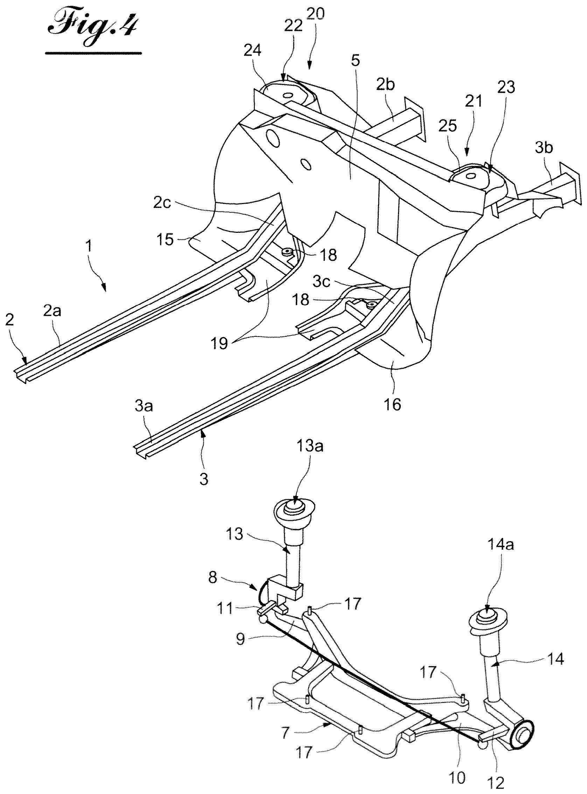

Comme cela ressort des figures 1 et 4 deux pions verticaux d'indexation 17 situés en arrière du berceau 7 suivant une même direction transversale s'engagent respectivement dans deux perçages 18 formés dans deux plaques 19 solidaires des longerons 2, 3 entre ceux-ci et en regard l'une de l'autre.

Les deux poutres antérieures 2b, 3b du brancard 1 sont pourvues de deux moyens 20, 21 situés à gauche et à droite de ces poutres à l'extérieur de celles-ci pour ancrer et supporter les têtes 13a, 14a des amortisseurs de suspension 13, 14 du train avant 8.

Chaque moyen d'ancrage 20 comprend un bol renversé 22, 23 dont la paroi supérieure 24, 25 s'étend perpendiculairement à la poutre antérieure correspondante 2b, 3b et un ensemble de parois 26, 27 reliées les unes aux autres et aux bols 22, 23 pour définir un passage de roue. Chaque ensemble 26, 27 de parois comprend notamment une paroi sensiblement plane 28, 29 permettant de fixer chaque moyen d'ancrage 20, 21 à une face plane externe des poutres antérieures 2b, 3b du brancard 1.

Les têtes 13a, 14a des amortisseurs de suspension 13, 14 sont ancrées dans les bols 22, 23.

La géométrie du train avant sur caisse du véhicule est définie par des angles caractéristiques tels que la chasse ou le carrossage déterminés par le constructeur en fonction des critères précis permettant de satisfaire aux exigences de tenue de route, de stabilité, et de précision de la direction du véhicule.

La symétrie de chasse ou de carrossage de véhicule est définie par la position des moyens d'ancrage et de support 20, 21 des têtes d'amortisseurs de suspension 13a, 14a par rapport aux poutres antérieures 2b, 3b du brancard 1.

Il est donc important que la position des moyens d'ancrage soit parfaitement définie lors du montage de l'ensemble à berceau 7 et train avant 8 à l'unité avant à brancard 1 et tablier 5 afin d'éviter toute dispersion dimensionnelle nuisible à la symétrie de chasse ou de carrossage sur caisse du véhicule.

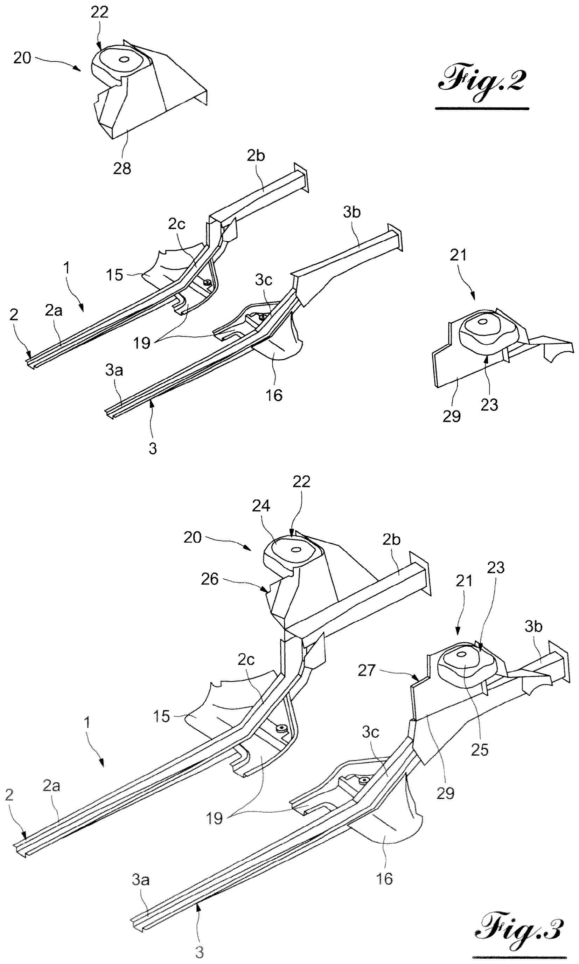

Jusqu'à maintenant, comme représenté aux figures 2 à 4, l'assemblage des moyens d'ancrage 20, 21 s'effectuait en les fixant tout d'abord aux poutres antérieures droite et gauche 2b et 3b du brancard 1 puis cet ensemble était fixé au tablier 5. Ce procédé d'assemblage a pour inconvénient d'occasionner une dispersion dimensionnelle lors de la fixation de moyens d'ancrage 20, 21 aux poutres antérieures 2b, 3b du brancard 1 et à laquelle s'ajoutait une dispersion dimensionnelle lors de l'assemblage du brancard 1 au tablier 5. Le montage de l'ensemble à berceau 7 et train avant 8 à l'unité avant constituée du brancard 1 pourvu de ces moyens d'ancrage 20, 21 et du tablier 5 se traduisait alors par une dispersion dimensionnelle sur la symétrie de chasse ou de carrossage sur caisse du véhicule pouvant aller jusqu'à 1,8 mm.

Le procédé de l'invention permet de réduire la dispersion dimensionnelle de la symétrie notamment de chasse sur caisse du véhicule.

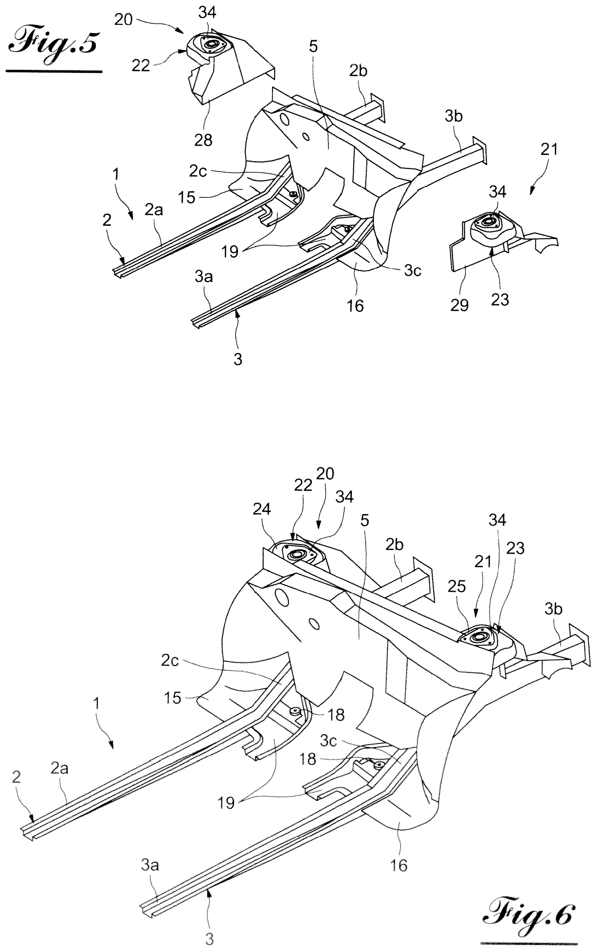

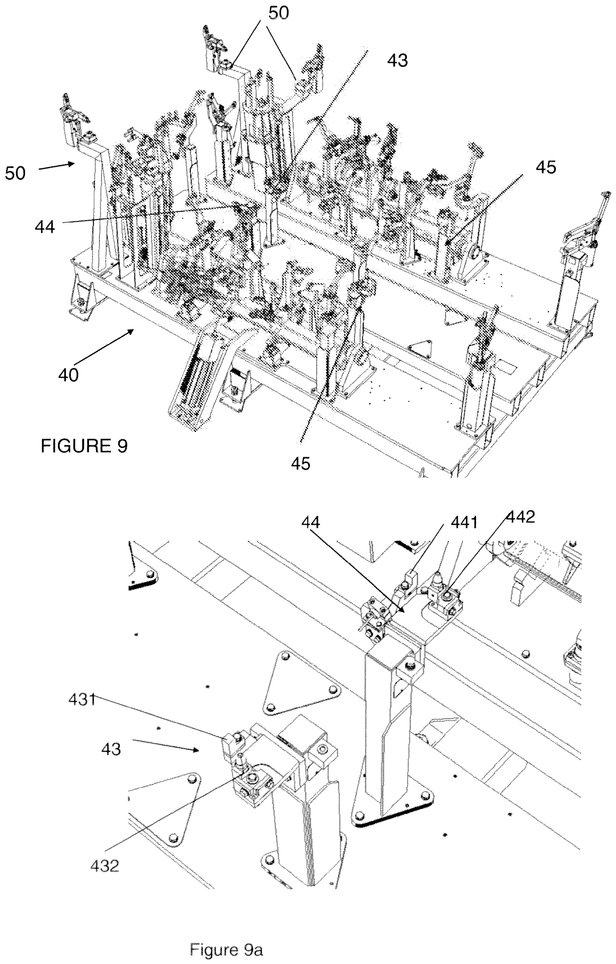

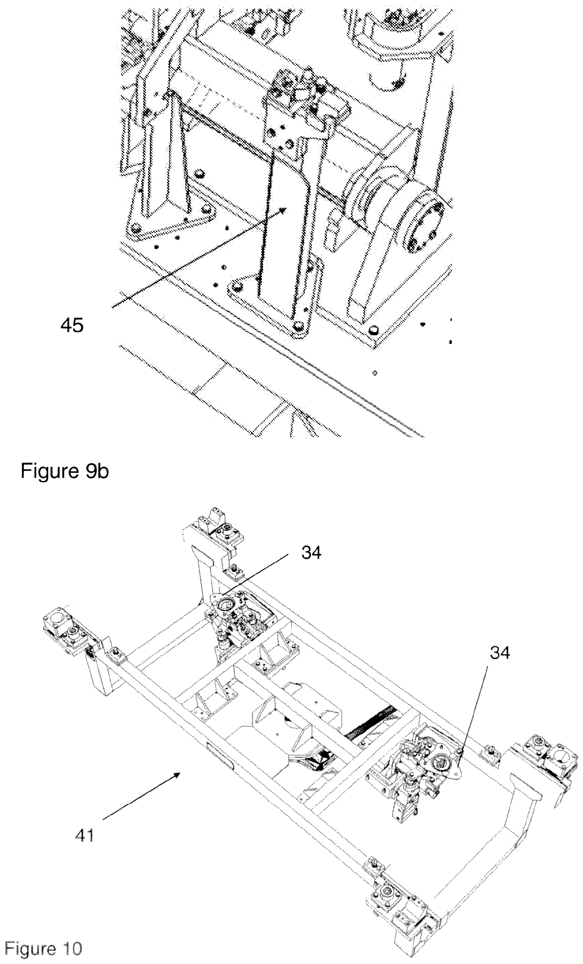

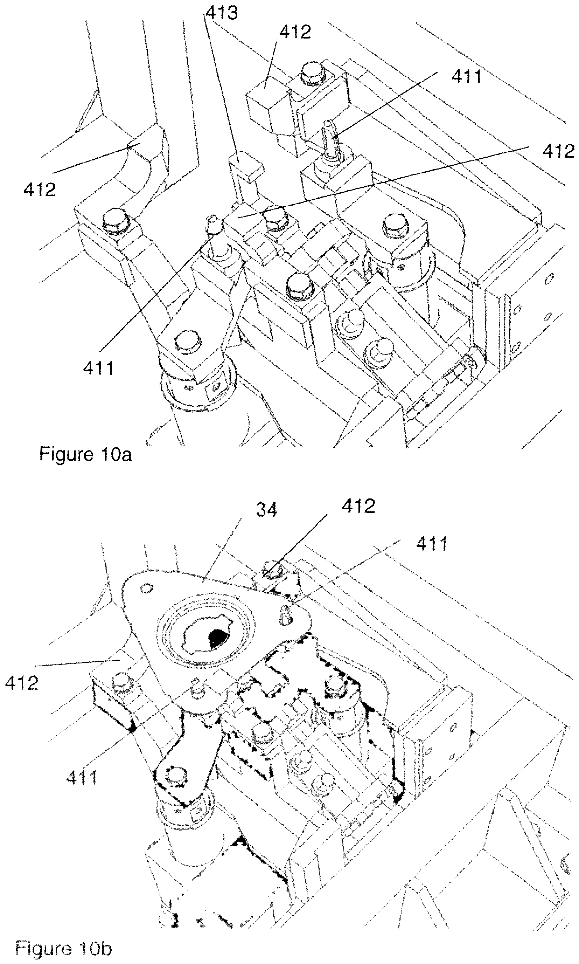

Comme représenté aux figures 5 et 6, le procédé de l'invention consiste tout d'abord à assembler et fixer les longerons 2, 3 du brancard 1 au tablier 2 pour constituer l'unité avant. Puis cette unité avant est positionnée sur la chaîne de montage relativement à un outil de référence ou gabarit fixe dans la chaîne de montage et qui est représenté aux figures 9 à 10b.

Cet outil de référence est constitué de deux outils, un outil inférieur 40 et un outil supérieur 41 qui vient se mettre en référence sur l'outil inférieur 40. L'outil de référence inférieur 40 sert de mise en référence à l'unité avant ou même au soubassement (c'est-à-dire unité avant et arrière) et l'autre dit outil supérieur 41 sert de mise en référence aux pièces supplémentaires telles que la plaque 34.

Cet outil de référence dans sa partie inférieure (outil inférieur) 40 reproduit exactement l'ensemble à berceau 7 et train avant 8 dans la géométrie souhaitée de ce train avant telle que par exemple une géométrie de chasse sur caisse du véhicule. L'outil de référence 40 comporte ainsi des points d'indexation 43, 44 reproduisant les emplacements d'ancrage des têtes 13a, 14a des amortisseurs de suspension 13, 14 du train avant 8 conformément à la géométrie souhaitée de ce train. Ainsi, l'unité avant est mise en référence sur l'outil inférieur 40 par un système appui/pilote 441, 441 et 431, 432 reprenant l'interface du berceau de train avant sur l'unité avant. D'autres points d'indexation 45 permettent de maintenir également l'unité avant au niveau des brancards 2, également à l'aide de système appui-pilote.

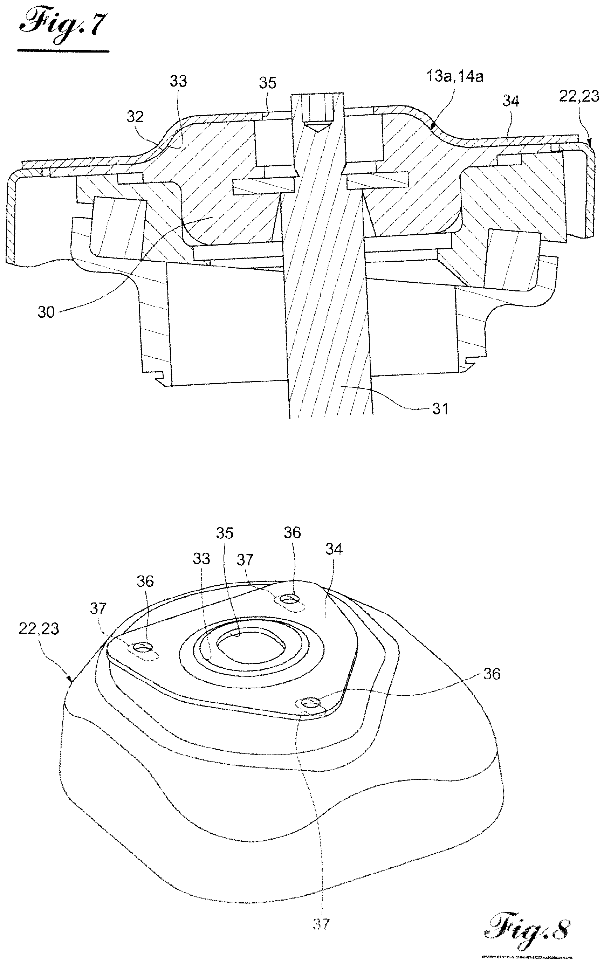

Ainsi, la forme de chaque point d'indexation 43, 44 de l'outil de référence inférieur 40 est identique à la forme de chaque tête 13a, 14a d'un amortisseur de suspension 13, 14 visible en figure 7 et destinée à être ancrée dans le bol correspondant 22, 23 en étant supportée par celui-ci.

Chaque tête d'amortisseur 13a, 14a comprend un corps supérieur métallique 30 solidaire de l'extrémité supérieure de la tige d'amortisseur 31 et dont la face supérieure comporte une portée périphérique tronconique 32 pouvant coopérer avec une portée tronconique de forme conjuguée 33 formée dans la paroi supérieure 24, 25 du bol 22, 23.

Comme cela ressort mieux de la figure 8, la portée tronconique 33 de chaque bol 22, 23 est formée, par exemple par emboutissage, dans une plaque 34 à orifice central 35 de passage de l'extrémité libre de la tige d'amortisseur 31 et amoviblement fixée sur la paroi 24, 25 du bol 22, 23 par l'intermédiaire de trois boulons de fixation, non représentés, traversant respectivement trois perçages 36, 37 de la plaque 34 et de la paroi supérieure 24, 25 de ce bol. Les perçages 36 de la plaque 34 sont circulaires tandis que les perçages 37 de la paroi 24, 25 du bol correspondant sont constitués par des trous oblongs parallèles occupant une direction perpendiculaire à la poutre antérieure correspondante 2b, 3b du brancard 1 lorsque des moyens d'ancrage 20, 21 sont solidarisés à la poutre antérieure correspondante.

En variante, la portée tronconique 33 pourrait être usinée directement dans la face interne de la paroi supérieure 24, 25 du bol 22, 23 concentriquement à un orifice de cette paroi permettant le passage de l'extrémité libre de la tige d'amortisseur 31.

Une fois l'unité avant positionnée relativement à l'outil de référence inférieur 40 fixe, les deux bols 22, 23 sont positionnés relativement aux poutres antérieures 2b, 3b du brancard 1 de l'unité avant et aux points d'indexation de l'outil de référence inférieur 40 reproduisant la forme externe tronconique 32 des têtes d'amortisseur 13a, 14a du train avant de façon que les plaques 28, 29 solidaires des bols 22, 23 viennent en appui sur les faces externes verticales des poutres antérieures 2b, 3b et que les bols 22, 23 coiffent les points d'indexation de l'outil de référence inférieur 40. Ainsi, en accostant les plaques 28, 29 respectivement sur les deux faces externes opposées des poutres antérieures 2b, 3b, les bols 22, 23 sont positionnés en direction longitudinale du véhicule et en direction verticale et, à l'aide l'outil de référence supérieur 41 mis en référence sur l'outil de référence inférieur 40, chaque plaque 34 est centrée automatiquement en appui sur la portée tronconique correspondante du point d'indexation après déplacement, le cas échéant, de la plaque suivant une direction perpendiculaire à la poutre antérieure correspondante 2b, 3b du brancard 1. Ensuite, chaque plaque 34 est fixée au bol correspondant 22, 23 par les trois boulons de fixation.

L'étape suivante consiste tout simplement à fixer les bols 22, 23 aux poutres antérieures 2b, 3b aux positions de réglage préalablement définies correspondant bien aux emplacements des têtes d'amortisseur 13a, 14a du train avant. Cette opération de fixation de moyens d'ancrage 20, 21 aux poutres antérieures 2b, 3b peut s'effectuer par soudage des plaques 28, 29 le long des bords supérieurs des poutres antérieures 2b, 3b du brancard 1.

Après retrait de l'unité avant de l'outil de référence inférieur 40, l'ensemble de berceau 7 et train avant 8 est assemblé à l'unité avant de façon que les têtes d'amortisseur 13a, 14a s'engagent dans leurs bols respectifs 22, 23 avec la portée tronconique 32 de chaque corps 30 d'une tête d'amortisseur 13, 14a venant en appui centré sur la portée tronconique conjuguée 33 du bol.

Le positionnement des moyens d'ancrage 20, 21 relativement aux poutres antérieures 2b, 3b du brancard 1 et leur fixation à ces poutres peut être effectué par un robot.

Les moyens d'ancrage et de support des têtes de suspension sont ainsi assemblés sur l'unité avant au même stade de positionnement de cette unité dans un référentiel commun qui est l'outil de référence reproduisant la géométrie souhaitée du train avant.

Ainsi, l'unité avant ou le soubassement est chargé sur l'outil de référence inférieur 40 manuellement, ou encore par robot, par barre-navette, etc., tandis que les pièces supplémentaires (plaques 34) sont chargées sur l'outil de référence supérieur 41 manuellement ou en automatique.

L'outil supérieur 41 vient se mettre en référence sur l'outil inférieur 40 (manuellement ou embarqué sur un robot) à l'aide de systèmes appui-pilotes et serrages 50 portés par l'outil inférieur 40 et les plaques 34 sont assemblés sur le soubassement. Cet outil supérieur 41 comporte des pilotes 411 de mise en référence des plaques 34 en XY et des appuis 412 de mise en référence de la plaque 34 en Z. Un serrage 413 est prévu évitant que la plaque 34 ne tombe lors de la trajectoire d'approche de l'outil supérieur 41 sur l'outil inférieur 40.

L'outil supérieur 41 est retiré. Le soubassement ou l'unité avant est évacué de l'outil inférieur 40 vers l'opération suivante.

Dans le cadre d'une symétrie de chasse, il a été constaté que le procédé de l'invention permet de réduire la dispersion dimensionnelle de cette symétrie de chasse sur caisse d'environ 40%, ce qui permet de réduire les phénomènes de tirage du véhicule. L'invention procure un gain de temps d'environ huit semaines de mise au point géométrique en phase d'industrialisation, ce qui correspond en pratique à l'assemblage de trente deux caisses de véhicules. Enfin, le procédé de l'invention ne nécessite pas d'investissement particulier ni d'emplacement supplémentaire dans la chaîne de fabrication et n'implique pas l'utilisation de nouvelle technologie.

## Revendications

1. Procédé de montage d'un ensemble de train avant (8) et de berceau (7) à une partie de caisse d'un véhicule constituée par une unité avant comportant deux longerons parallèles (2, 3) et un tablier (5) solidaire des longerons (2,3), **caractérisé en ce qu'**il comprend :
- une étape d'assemblage de l'ensemble à train avant (8) et berceau (7),
- une étape d'assemblage de l'unité avant à longerons (2,3) et tablier (5), ce procédé de montage étant **caractérisé par**;
- une étape de positionnement de l'unité avant relativement à un outil de référence qui comporte des points d'indexation reproduisant les emplacements d'ancrage de têtes d'amortisseurs (13a, 14a) du train avant (8) conformément à une géométrie déterminée du train avant (8),
- une étape de positionnement de bols (22, 23) d'ancrage des têtes d'amortisseurs (13a, 14a) relativement à l'unité avant et aux points d'indexation de l'outil de référence,
- une étape de fixation des bols (22, 23) à l'unité avant à la position correspondant aux emplacements d'ancrage des têtes d'amortisseurs (13a, 14a) du train avant (8),
- une étape de retrait mutuel de l'outil de référence et de l'unité avant, et
- une étape d'assemblage de l'ensemble de train avant (8) et de berceau (7) à l'unité avant de façon que les têtes d'amortisseurs (13a, 14a) puissent être ancrées dans leurs bols respectifs (22,23).

2. Procédé selon la revendication 1, **caractérisé en ce que** l'outil de référence est fixe.

3. Procédé selon la revendication 1 ou 2, **caractérisé en ce qu'**il consiste à positionner longitudinalement et verticalement chaque bol d'ancrage (22, 23) relativement à l'unité avant par appui d'une paroi sensiblement plane (28, 29) du bol (22, 23) le long d'une paroi latérale du longeron correspondant (2, 3) et à fixer chaque bol d'ancrage (22, 23) à la paroi latérale du longeron (2, 3).

4. Procédé selon la revendication 3, **caractérisé en ce que** chaque bol d'ancrage (22, 23) est fixé au longeron correspondant (2, 3) par soudage.

5. Procédé selon l'une des revendications précédentes, **caractérisé en ce qu'**à l'étape de positionnement des bols d'ancrage (22, 23), ceux-ci sont centrés sur les points d'indexation de l'outil de référence par des portées tronconiques de formes conjuguées respectivement des bols et des points d'indexation.

6. Procédé selon la revendication 5, **caractérisé en ce que** la portée tronconique (33) de chaque bol (22, 23) est formée dans une plaque (34) amoviblement fixée sur une paroi supérieure (24, 25) du bol (22, 23).

7. Procédé selon la revendication 6 considérée en combinaison avec la revendication 3, **caractérisé en ce que** la plaque (34) peut être positionnée relativement au bol (22, 23) suivant une direction transversale au longeron correspondant (2, 3) avant d'être fixée au bol (22, 23).

## Patentansprüche

1. Verfahren zur Montage einer Vorderachs- (8) und Aufhängungs- (7)-Baugruppe an einem Karosserieteil eines Fahrzeugs, die aus einer Vordereinheit besteht, die zwei parallele Längsträger (2, 3) und eine Stirnwand (5), die mit den Längsträgern (2, 3) fest verbunden ist, umfasst, **dadurch gekennzeichnet, dass** es umfasst:
- einen Zusammenfügeschritt der Baugruppe mit Vorderachse (8) und Aufhängung (7),
- einen Zusammenfügeschritt der Vordereinheit mit Längsträgern (2, 3) und Stirnwand (5),
Montageverfahren **gekennzeichnet durch**
- einen Positionierungsschritt der Vordereinheit in Bezug zu einem Referenzwerkzeug, das Positionierungspunkte umfasst, die die Verankerungsstellen von Stoßdämpferköpfen (13a, 14a) der Vorderachse (8) gemäß einer bestimmten Geometrie der Vorderachse (8) wiedergeben,
- einen Positionierungsschritt von Schalen (22, 23) zum Verankern der Stoßdämpferköpfe (13a, 14a) in Bezug zu der Vordereinheit und den Positionierungspunkten des Referenzwerkzeugs,
- einen Befestigungsschritt der Schalen (22, 23) an der Vordereinheit in der Position, die den Verankerungsstellen der Stoßdämpferköpfe (13a, 14a) der Vorderachse (8) entspricht,
- einen Schritt des gegenseitigen Zurückziehens des Referenzwerkzeugs und der Vordereinheit, und
- einen Zusammenfügeschritt der Vorderachsbaugruppe (8) und der Aufhängung (7) an der Vordereinheit derart, dass die Stoßdämpferköpfe (13a, 14a) in ihren jeweiligen Schalen (22, 23) verankert werden können.

2. Verfahren nach Anspruch 1, **dadurch gekennzeichnet, dass** das Referenzwerkzeug stationär ist.

3. Verfahren nach Anspruch 1 oder 2, **dadurch gekennzeichnet, dass** es darin besteht, jede Verankerungsschale (22, 23) längs und vertikal in Bezug zu der Vordereinheit durch Aufliegen einer im Wesentlichen flachen Wand (28, 29) der Schale (22, 23) entlang einer Seitenwand des entsprechenden Längsträgers (2, 3) zu positionieren und jede Verankerungsschale (22, 23) an der Seitenwand des Längsträgers (2, 3) zu befestigen.

4. Verfahren nach Anspruch 3, **dadurch gekennzeichnet, dass** jede Verankerungsschale (22, 23) an dem entsprechenden Längsträger (2, 3) durch Schweißen befestigt ist.

5. Verfahren nach einem der vorhergehenden Ansprüche, **dadurch gekennzeichnet, dass** bei dem Positionierungsschritt der Verankerungsschalen (22, 23) diese auf den Positionierungspunkten des Referenzwerkzeugs durch kegelstumpfförmige Auflagen mit Formen zentriert werden, die jeweils den Schalen und den Positionierungspunkten zugeordnet sind.

6. Verfahren nach Anspruch 5, **dadurch gekennzeichnet, dass** die Kegelstumpfauflage (33) jeder Schale (22, 23) aus einer Platte (34) gebildet ist, die auf der oberen Wand (24, 25) der Schale (22, 23) abnehmbar befestigt ist.

7. Verfahren nach Anspruch 6, kombiniert mit Anspruch 3 betrachtet, **dadurch gekennzeichnet, dass** die Platte (34) in Bezug zu der Schale (22, 23) entlang einer Richtung quer zu dem entsprechenden Längsträger (2, 3) positioniert werden kann, bevor sie an der Schale (22, 23) befestigt wird.

## Claims

1. A method for mounting a front axle (8) and cradle (7) assembly to a body part of a vehicle, constituted by a front unit comprising two parallel side members (2, 3) and a dash panel (5) integral with the side members (2, 3), **characterized in that** it includes:
- an assembling step of the front axle (8) and cradle (7) assembly,
- an assembling step of the front unit of side members (2, 3) and dash panel (5),
this mounting method being **characterized by**:
- a step of positioning of the front unit relative to a reference tool which comprises indexing points reproducing the locations for anchoring damper heads (13a, 14a) of the front axle (8) in accordance with a specific geometry of the front axle (8),
- a step of positioning of anchoring bowls (22, 23) of the damper heads (13a, 14a) relative to the front unit and to the indexing points of the reference tool,
- a step of fixing the bowls (22, 23) to the front unit at the position corresponding to the locations for anchoring the damper heads (13a, 14a) of the front axle (8),
- a step of mutual withdrawal of the reference tool and of the front unit, and
- a step of assembling the front axle (8) and cradle (7) assembly to the front unit such that the damper heads (13a, 14a) can be anchored in their respective bowls (22, 23).

2. The method according to claim 1, **characterized in that** the reference tool is fixed.

3. The method according to claim 1 or 2, **characterized in that** it consists in positioning each anchoring bowl (22, 23) longitudinally and vertically relative to the front unit by the support of a substantially flat wall (28, 28) of the bowl (22, 23) along a lateral wall of the corresponding side member (2, 3) and in fixing each anchoring bowl (22, 23) to the lateral wall of the side member (2, 3).

4. The method according to claim 3, **characterized in that** each anchoring bowl (22, 23) is fixed to the corresponding side member (2, 3) by welding.

5. The method according to one of the preceding claims, **characterized in that** at the step of positioning of the anchoring bowls (22, 23), the latter are centred on the indexing points of the reference tool by frustoconical bearings of mating shapes respectively of the bowls and of the indexing points.

6. The method according to claim 5, **characterized in that** the frustoconical bearing (33) of each bowl (22, 23) is formed in a plate (34) fixed detachably on an upper wall (24, 25) of the bowl (22, 23).

7. The method according to claim 6 considered in combination with claim 3, **characterized in that** the plate (34) can be positioned relative to the bowl (22, 23) along a transverse direction to the corresponding side member (2, 3) before being fixed to the bowl (22, 23) .
